# EUROPEAN PATENT APPLICATION

(11) **EP 2 016 835 A1**
(43) Date of publication of application: **21.01.2009**
(21) Application number: 07737145.8
(22) Date of filing: 08.05.2007
(51) Int. Cl.: A23F 3/16

(54) **TEA BEVERAGE PACKED IN CONTAINER**

(30) Priority: 09.05.2006 JP 2006129740; 27.04.2007 JP 2007118452
(71) Applicant: Kao Corporation, Chuo-ku Tokyo 103-8210 (JP)
(72) Inventor: TAKATSU, Hideyuki, Tokyo 131-8501 (JP); SATO, Makoto, Tokyo 131-8501 (JP); OTSUKA, Kazuhiro, Tokyo 131-8501 (JP)
(74) Representative: HOFFMANN EITLE
(86) International application number: PCT/JP2007/000489
(87) International publication number: WO 2007/129472

(57) **Abstract**

Provided is a packaged tea beverage which has good flavor and is compositionally excellent in storage stability. The packaged tea beverage comprises a tea extract having a ratio of gallate-type catechins in non-polymer catechins of less than 50% by mass added to a tea extract liquid, and (A) 0.072 to 0.4% by mass of non-polymer catechins and (B) 21 to 150 ppm of gallic acid, wherein a ratio of gallate-type catechins in non-polymer catechins is 0 to 50% by mass and a ratio of epi-type catechins in non-polymer catechins is 30 to 60% by mass.

## Description

### Field of the Invention

The present invention relates to a packaged tea beverage containing a high concentration of non-polymer catechins, which has good flavor and is excellent in the storage stability of catechin composition.

### Background of the Invention

Catechins are reported to have an inhibitory effect on α-amylase activity or the like as one of the effects thereof (e.g., Patent Document 1). For such a physiological effect to emerge, it is necessary for catechins to be ingested more conveniently in large amounts. So there has been a demand for a technique making it possible for a high concentration of catechins to be added to a beverage.

Among such techniques is a method which involves utilizing a tea extract such as a green tea extract concentrate to add catechins in a dissolved state to a beverage. However, the persisting bitterness and persisting astringency intrinsic to caffeine and green tea are known to give a great damage to the commercial value of a beverage, depending on the type of the beverage to which catechins are blended in a high concentration, for example, when catechins are added to a black tea extract liquid or carbonated beverage.

It has long been known that the extract liquid of a fermented tea (e.g., black tea) can be treated with tannase to suppress its suspension, i.e., tea cream formation, during low-temperature cooling. Gallate-type catechins responsible for bitterness can also be reduced according to a method for obtaining a mixture of catechins and gallic acid by treating the gallate-type catechins with tannase to convert part or all thereof to gallic acid, as described in Patent Document 1. An adsorption method (Patent Documents 2 to 4), an extraction method (Patent Document 5), and other methods are also known to have the ability to remove contaminants such as caffeine from a tea extract.
Patent Document 1: JP-A-2003-33157
Patent Document 2: JP-A-05-153910
Patent Document 3: JP-A-08-109178
Patent Document 4: JP-A-2002-335911
Patent Document 5: JP-A-01-289447

### Summary of the Invention

The present invention provides a packaged tea beverage, including a tea extract having the ratio of gallate-type catechins in non-polymer catechins of less than 50% by mass added to a tea extract liquid, containing the following components (A) and (B):
(A) 0.072 to 0.4% by mass of non-polymer catechins, and
(B) 21 to 150 ppm of gallic acid,
wherein the ratio of gallate-type catechins in non-polymer catechins and the ratio of epi-type catechins in non-polymer catechins are 0 to 50% by mass and 30 to 60% by mass, respectively.

### Illustrative Embodiments of the Invention

A mixture of catechins and gallic acid obtained by tannase treatment has a problem that could cause acidic taste and harsh taste alike. Meanwhile, a tea extract obtained by no or insufficient tannase treatment turns out to have such a problem that this extract is not suitable for a packaged tea beverage because its active component 'catechins' tends to cause its compositional changes, color tone changes and flavor changes.
Thus, the present invention provides a packaged tea beverage, which has a reduced ratio of gallate-type catechins, exhibits suppressed bitterness despite a high concentration of non-polymer catechins, and does not cause catechins to compositionally change even when stored over a long period of time.

Accordingly, the present inventors have found that in producing a packaged tea beverage by using a tea extract whose ratio of gallate-type catechins is adjusted to less than 50% by mass in advance, adjustment of the gallic acid content to 21 to 150 ppm, adjustments of the ratios of gallate-type and epi-type catechins in non-polymer catechins to 0 to 50% by mass and 30 to 60% by mass, respectively, can provide a packaged tea beverage, which not only shows suppressed bitterness but also hardly brings compositional change to catechins even when stored over a long period of time.

The packaged tea beverage according to the present invention contains non-polymer catechins in an amount sufficient to exert its physiological effect and is easy to drink because of reduced bitterness and excellent in the stability of flavor and composition thereof even under long-term storage.

The term "non-polymer catechins" used herein is a generic term applied to non-epi-type catechins such as catechin, gallocatechin, catechin gallate, and gallocatechin gallate and epi-type catechins such as epicatechin, epigallocatechin, epicatechin gallate, and epigallocatechin gallate.

The term "gallate-type catechins," used herein is a generic term applied to catechin gallate, gallocatechin gallate, epicatechin gallate, epigallocatechin gallate and the like. The term "gallo-type catechins" used herein is also a generic term applied to gallocatechin, gallocatechin gallate, epigallocatechin, epigallocatechin gallate and the like.
The term "ratio of gallate-type catechins" used herein is the ratio of the total amount of catechin gallate, gallocatechin gallate, epicatechin gallate, and epigallocatechin gallate to the total amount of catechin, gallocatechin, catechin gallate, gallocatechin gallate, epicatechin, epigallocatechin, epicatechin gallate, and epigallocatechin gallate.

The packaged tea beverage according to the present invention is obtained by blending a tea extract liquid with a tea extract having a ratio of gallate-type catechins in non-polymer catechins of less than 50% by mass. When the tea extract has a ratio of gallate-type catechins in non-polymer catechins of 50% by mass or more, the extract is preferably subjected to tannase treatment, removal of a product forming tea cream during low temperature cooling, or the like in any stage of the purification and production process to adjust the ratio of gallate-type catechins to less than 50% by mass.

The tea extracts used in the present invention include an extract liquid obtained from green tea leaves. More specifically, tea leaves used include tea leaves manufactured, for example, from tea leaves of the Genus Camellia, e.g., C. sienensis and C. assamica, and the Yabukita variety or hybrids thereof. The manufactured tea leaves include green teas such as sencha (middle-grade green tea), bancha (coarse green tea), gyokuro (shaded green tea), tencha (powdered tea) and kamairicha (roasted tea), or CTC tea leaves. Preferred examples of the tea extract used in the present invention include a dried, concentrated or frozen product of an extract liquid obtained from green tea leaves.

The extraction from tea leaves is performed by stirring extraction or the like using water as an extraction solvent. In the extraction, an organic salt such as an ascorbate (e.g., sodium salt) or an organic acid may be added to the water in advance. These may be combined with a method which involves effecting extraction while removing dissolved oxygen by degassing by boiling or ventilating an inert gas such as nitrogen gas, i.e., in a so-called non-oxidative atmosphere. The extract liquid thus obtained is dried or concentrated to provide a tea extract used for the present invention. Forms of the tea extract include liquid, slurry, semisolid and solid forms.

The tea extract used may be an extract obtained by extraction using tea leaves subjected to contact treatment with carbon dioxide in a supercritical state. This method is intended to obtain an extract containing non-polymer catechins from the tea leaves which are residues after the supercritical extraction.

As a tea extract used for the present invention, a concentrate of a tea extract dissolved or diluted in water or a combination of an extract liquid from tea leaves and a concentrate of a tea extract may be used instead of employing a dried or concentrated extract liquid obtained from tea leaves.
Here, the concentrate of a tea extract is that obtained by extracting tea leaves with hot water or a water-soluble organic solvent and concentrating the resultant extract, and refers to, for example, that prepared by a method as described in JP-A-59-219384, JP-A-04-20589, JP-A-05-260907, or JP-A-05-306279. Specifically, the tea extract used may also be a solid tea extract such as commercially available "Polyphenone" from Tokyo Food Techno Co., Ltd., "Teafuran" from Ito En Ltd. and "Sunphenone" from Taiyo Kagaku Co., Ltd.

These tea extracts or concentrates thereof are treated with tannase to reduce the ratio of gallate-type catechins. The tannase used here is commercially available tannase preferably having an enzymatic activity of 500 to 5,000 U/g. Not more than 500 U/g cannot provide sufficient activity; not less than 5,000 U/g makes it difficult to control the reaction system because an enzymatic reaction rate is too rapid.
The tannase is suitably tannin acylhydrolase EC3.1.1.20. Commercial products thereof include, as trade names, "Tannase" from Kikkoman Corporation and Tannase "Sankyo" from Sankyo Co., Ltd.

The specific procedure for tannase treatment preferably involves adding 0.5 to 10% by mass of tannase to non-polymer catechins in a green tea extract in view of the effect of reducing the ratio of non-polymer gallate-type catechins and the termination of the enzymatic reaction at the optimal ratio of non-polymer gallate-type catechins. To terminate the tannase treatment including enzyme inactivation within 2 hours as the optimal enzymatic reaction time, the tannase concentration is preferably 0.5 to 5% by mass, more preferably 2 to 4% by mass.
The tannase treatment temperature is preferably 15 to 40°C at which the optimal enzymatic activity is obtained, more preferably 20 to 30°C.

Terminating the tannase reaction requires inactivating the enzyme activity. The enzyme inactivation temperature is preferably 70 to 90°C, and the enzyme reaction can be inactivated by heating by a batch method or a continuous system such as a plate-type heat exchanger. After the inactivation treatment of tannase, the tea extract can also be cleaned up by an operation such as centrifugation.

The tea extract used in the present invention is also preferably subjected to purification treatment before or after the tannase treatment in view of flavor, stability, and the like. Means for such purification treatment include operations such as (1) synthetic adsorbent treatment, (2) extraction with a mixture of an organic solvent and water, (3) activated carbon treatment, (4) activated clay and/or acid clay treatment, and (5) solid-liquid separation, either alone or in a combination thereof.

Examples of the synthetic adsorbent treatment include a method which involves causing the tea extract to be adsorbed to a synthetic adsorbent and then eluting non-polymer catechins. More specifically, the tea extract is adsorbed to the synthetic adsorbent; the synthetic adsorbent is washed; and a basic aqueous solution is then allowed to contact therewith to elute non-polymer catechins. The synthetic adsorbent treatment can decrease caffeine and gallic acid. Examples of the synthetic adsorbent to be used include that using styrene-divinylbenzene, modified styrene-divinylbenzene, or methyl methacrylate as a body. Examples of the styrene-divinylbenzene-based synthetic adsorbent include, as trade names, Diaion HP-20 and HP-21 and Sepabeads SP70, SP700, SP825 and SP-825 from Mitsubishi Chemical Corporation; Amberlite XAD4, XAD16HP, XAD1180 and XAD2000 from Organo Corporation (supplier: Rohm & Hass, U.S.); and Duolite S874 and S876 from Sumitomo Chemical Co., Ltd. (supplier: Rohm & Hass, U.S.). Examples of the modified styrene-divinylbenzene-based synthetic adsorbent whose adsorption power is enhanced by the nucleus substitution with a bromine atom include, as trade names, Sepabeads SP205, SP206 and SP207 from Mitsubishi Chemical Corporation. Examples of the methyl methacrylate-based synthetic adsorbent include Sepabeads HP 1MG and HP 2MG from Mitsubishi Chemical Corporation, XAD7HP from Organo Corporation, and Duolite S877 from Sumitomo Chemical Co., Ltd.
Among synthetic adsorbents, the modified polystyrene-based synthetic adsorbent and methyl methacrylate-based synthetic adsorbent are preferable. Specific examples of the synthetic adsorbent include modified polystyrene-based synthetic adsorbents such as SP207 (from Mitsubishi Chemical Corporation) and methacrylate-based synthetic adsorbents such as HP 2MG (from Mitsubishi Chemical Corporation); however, SP207 is preferable for the above reasons.

The column packed with the synthetic adsorbent is preferably subjected to removal of raw monomers in the adsorbent and impurities in the raw monomers in advance by washing with a 95% by volume ethanol aqueous solution under liquid-passing conditions of SV (space velocity) = 1 to 10 [h⁻¹] and a volumetric ratio of liquid flow to the synthetic adsorbent of 2 to 10 (v/v). Subsequently, washing with water is performed under liquid-passing conditions of SV = 1 to 10 [h⁻¹] and a volumetric ratio of liquid flow to the synthetic adsorbent of 1 to 10 (v/v) to remove ethanol and replace the liquid contained in the synthetic adsorbent with an aqueous liquid; this procedure enhances the ability thereof to adsorb non-polymer catechins.

Means for causing the tea extract to be adsorbed to the synthetic adsorbent preferably involves passing the tea extract through the column packed with the synthetic adsorbent. Conditions under which the tea extract is passed through the column packed with the synthetic adsorbent are preferably a liquid-passing rate of 0.5 to 10 [h⁻¹] in terms of SV (space velocity) and a volumetric ratio of liquid flow to the synthetic adsorbent of 0.5 to 20 (v/v). In addition, a green tea extract is adsorbed to the synthetic adsorbent and then washed with water; washing conditions are preferably set to a liquid-passing rate of 0.5 to 10 [h⁻¹] in terms of SV (space velocity) and a volumetric ratio of liquid flow to the synthetic adsorbent of 1 to 10 (v/v) to remove the gallic acid and impurities adhering to the synthetic adsorbent.

It is preferable that a sodium- or potassium-based alkaline aqueous solution (e.g., a sodium hydroxide aqueous solution or a sodium carbonate aqueous solution) is suitably used as the basic aqueous solution employed for the elution of non-polymer catechins. The alkaline aqueous solution preferably has a pH ranging from 7 to 14. Examples of the sodium-based aqueous solution having a pH of 7 to 14 include a 4%-or less sodium hydroxide aqueous solution and a 1N sodium carbonate aqueous solution.

In the elution step, two kinds or more of eluents whose pHs are different from each other are preferably used to allow these eluents to contact with the synthetic adsorbent in order of increasing pH thereof. This enables the fractionation of catechin, gallocatechin, catechin gallate, gallocatechin gallate, epicatechin, epigallocatechin, epicatechin gallate, and epigallocatechin gallate. Examples of using two kinds or more of eluents whose pHs are different include flowing an eluent having a pH of 3 to 7, followed by flowing a basic eluent having a pH of 9 to 11, which enables the separation of each non-polymer catechin.

Because the elution was performed using the basic aqueous solution, the eluate of non-polymer catechins contains an alkali metal salt such as a sodium salt; thus, it is preferable to remove the alkali metal ion therefrom employing a cation exchange resin, particularly an H-type cation exchange resin. Specific examples of the cation exchange resin which may be used include Amberlite 200CT, IR120B, IR124 and IR118 and Diaion SK1B, SK102, PK208 and PK212.

Among the above purification treatments, the (2) extraction with a mixture of an organic solvent and water and (3) activated carbon treatment, or the (2) extraction with a mixture of an organic solvent and water and (4) activated clay and/or acid clay treatment are preferably performed in combination. In addition, the (2) extraction with a mixture of an organic solvent and water, (3) activated carbon treatment and (4) activated clay and/or acid clay treatment are more preferably combined.

For the extraction with a mixture of an organic solvent and water, the tea extract is dispersed in the mixture of an organic solvent and water. It is preferable that the mass content ratio of the organic solvent to water in the dispersion is finally 60/40 to 97/3, more preferably 60/40 to 75/25 or 85/15 to 95/5 in view of extraction efficiency for catechins, purification of the tea extract, drinkability over a long period of time, rectification conditions for the recovered organic solvent, and the like.

Examples of the organic solvent include ethanol, methanol, acetone, and ethyl acetate. Among these, the hydrophilic organic solvents such as methanol, ethanol and acetone are preferable; more preferred is ethanol in view of use in foods. Examples of the water include ion exchanged water, city water, and natural water. The organic solvent and water may be mixed after mixing or separately with a microfiltrated tea extract; however, it is preferable that the mixed solution is made and then subjected to mixing treatment with the tea extract.

A tea extract is preferably added, for treatment, in an amount of 10 to 40 parts by mass, more preferably 10 to 30 parts by mass, even more preferably 15 to 30 parts by mass (in terms of dry mass) based on 100 parts by mass of the mixture of an organic solvent and water because a green tea extract can be efficiently treated.

A maturing time of about 10 to 180 minutes may be more preferably set after adding the mixture of an organic solvent and water.
These treatments can be carried out at 10 to 60°C, preferably 10 to 50°C, more preferably 10 to 40°C.

The activated carbon used in the activated carbon treatment is not particularly limited provided that it is generally employed in an industrial level; examples thereof which may be used include commercial products such as ZN-50 (from Hokuetsu Carbon Industry Co., Ltd.); Kuraraycoal GLC, Kuraraycoal PK-D, and Kuraraycoal PW-D (Kuraray Chemical Co., Ltd.); and Shirasagi AW50, Shirasagi A, Shirasagi M, and Shirasagi C (Takeda Pharmaceutical Company Limited).
The activated carbon preferably has a pore volume of 0.01 to 0.8 mL/g, more preferably 0.1 to 0.8 mL/g. In addition, it preferably has a specific surface area ranging from 800 to 1,600 m²/g, more preferably from 900 to 1,500 m²/g. These physical properties are values based on the nitrogen adsorption method.

The activated carbon treatment is preferably performed after adding the green tea extract to the mixed solution of an organic solvent and water. The activated carbon is preferably added in an amount of 0.5 to 8 parts by mass, more preferably 0.5 to 3 parts by mass based on 100 parts by mass of the mixed solution of an organic solvent and water in view of a purification effect and reduced cake resistance during the step of filtration.

The acid clay or activated clay contains SiO₂, Al₂O₃, Fe₂O₃, CaO, MgO, and the like as general chemical ingredients; however, each clay preferably has a SiO₂/Al₂O₃ ratio of 3 to 12, more preferably 4 to 9. Each clay also preferably has a composition containing 2 to 5% by mass of Fe₂O₃, 0 to 1.5% by mass of CaO, and 1 to 7% by mass of MgO.

The specific surface area of the acid clay or activated clay varies depending on the extent of acid treatment and the like; however, it is preferably 50 to 350 m²/g. The pH of each clay is preferably 2.5 to 8, more preferably 3.6 to 7 in the form of a 5% by mass suspension. Examples of the acid clay which may be used include commercial products such as Mizuka-Ace #600 (from Mizusawa Industrial Chemicals Ltd.).

The ratio by mass of the acid clay or activated clay when combined with activated carbon is desired to be 1 to 10 to 1 of the activated carbon; the ratio of activated carbon:acid clay or activated clay is preferably 1:1 to 1:6.

The resulting tea extract is preferably clarified to enhance the product stability, if necessary. Specific examples of the operation of clarification include solid-liquid separating the solid and the water-soluble part by filtration and/or centrifugation treatment.

Solid-liquid separation conditions are determined as appropriate so that a predetermined turbidity level is achieved. When the solid-liquid separation is performed by the filtration, filtration conditions are preferably a temperature of 5 to 70°C, more preferably 10 to 40°C. The pressure is desired to be within the pressure resistance range of the membrane module to be used; for example, it is preferably 30 to 400 kPa, more preferably 50 to 400 kPa, even more prefarably 50 to 350 kPa. The membrane preferably has a pore diameter of 1 to 30 µm, more preferably 2 to 25µm, even more preferably 2 to 20µm in view of providing a predetermined turbidity.

The centrifuge used is preferably a common apparatus such as disk-type, cylidrical and decanter-type centrifuges. Centrifugation conditions are preferably a temperature of 5 to 70°C, more preferably 10 to 40°C. The revolution speed and time are desired to be conditions controlled so that a predetermined turbidity level is achieved. For example, in the case of the disk-type centrifuge, preferred are 3,000 to 10,000 r/min., more preferably 5,000 to 10,000 r/min., even more preferably 6,000 to 10,000 r/min. and 0.2 to 30 minutes, more preferably 0.2 to 20 minutes, even more preferably 0.2 to 15 minutes.

The solid-liquid separation is preferably performed by membrane filtration. The polymer membrane used for membrane filtration is a hydrocarbon, fluorinated hydrocarbon or sulfone polymer membrane; examples thereof include polyolefin polymer membranes such as polyethylene and polypropylene; and fluorinated polyolefin polymer membranes such as polytetrafluoroethylene (PTFE) and polyvinylidene difluoride (PVDF). Examples thereof also include sulfone polymer membranes such as polysulfone (PSU) and polyethersulfone (PES). The polymer membrane preferably has a membrane pore diameter of 0.05 to 0.8 µm, more preferably 0.05 to 0.5 µm, even more prefearbly 0.08 to 0.5 µm. The membrane also preferably has a thickness of 0.1 to 2.5 mm, more preferably 0.3 to 2.0 mm, even more preferably 0.3 to 1.5 mm.

The tea extract used in the present invention preferably contains 10 to 90% by mass, more preferably 20 to 80% by mass, even more preferably 30 to 70% by mass of non-polymer catechins in the solid content thereof.

The ratio of gallate-type catechins in the tea extract is required to be less than 50% by mass in view of suppressing bitterness; however, it is preferably 5 to 48% by mass, more preferably 15 to 36% by mass in view of the effectiveness of the physiological effect of non-polymer catechins and the reduction of the bitterness.

When the caffeine concentration in the beverage of the present invention is expressed based on the non-polymer catechins, the ratio (by mass) of caffeine/total non-polymer catechins is preferably 0.20 or less, more preferably 0.001 to 0.15, still more preferably 0.01 to 0.14, much more prefarably 0.05 to 0.13. The concentration is achieved, for example, by a method using a tea extract satisfying the conditions or by a method which involves, when a green tea extract having a high caffeine content is used, blending a tea extract having a low caffeine content (catechin preparation or the like) together therewith.

In the packaged tea beverage according to the present invention, non-polymer catechins in a water-dissolved state are contained in an amount of 0.072 to 0.4% by mass, preferably 0.08 to 0.3% by mass, more preferably 0.09 to 0.3% by mass, still more preferably 0.1 to 0.3% by mass. The range of content of non-polymer catechins facilitates the ingestion of a large amount of non-polymer catechins and is also preferable in view of the stability of flavor and color tone. The concentration of the non-polymer catechins can be controlled by the blending amount of the tea extract.

In the packaged tea beverage according to the present invention, the content of gallic acid is preferably 21 to 150 ppm, more preferably 25 to 125 ppm, even more preefrably 30 to 100 ppm in view of the effect of reducing bitter and acid tastes and further the storage stability of the flavor and composition. The content of gallic acid can be controlled by a method which involves, as described above, hydrolyzing the tea extract with tannase or the like, causing the hydrolyzed extract to be adsorbed to a synthetic adsorbent, and then eluting the extract with a basic aqueous solution, or by the blending amount of the tea extract.

In the packaged tea beverage according to the present invention, the ratio of epi-type catechins in non-polymer catechins is preferably 30 to 60% by mass, more preferably 41 to 60% by mass in view of heat load for sterilization and pH during sterilization. Here, the ratio of epi-type catechins refers to the ratio of epicatechin, epigallocatechin, epicatechin gallate, and epigallocatechin gallate in the above non-polymer catechins. The ratio of epi-type catechins can be controlled by the pH of the beverage and sterilization temperature and time.

The packaged tea beverage according to the present invention encompasses green tea beverage, oolong tea beverage, black tea beverage, and a mixed beverage thereof. These beverages can be each produced by blending the tea extract whose ratio of gallate-type catechins is controlled in one or more tea extract liquids selected from the group consisting of a green tea extract liquid, an oolong tea extract liquid, and a black tea extract liquid.

The green tea extract liquid can be obtained by extraction using, as a raw material, the same green tea leaves as described above and, as an extraction solvent, water or water to which an organic acid salt such as sodium ascorbate, an organic acid such as ascorbic acid, or an inorganic salt such as baking soda is added. The oolong tea extract liquid can be obtained by extraction using, as a raw material, oolong tea leaves and, as an extraction solvent, water or water to which an organic acid salt such as sodium ascorbate, an organic acid such as ascorbic acid, or an inorganic salt such as baking soda is added. The black tea extract liquid can be obtained by extraction using, as a raw material, black tea leaves and, as an extraction solvent, water or water to which an organic acid salt such as sodium ascorbate, an organic acid such as ascorbic acid, or an inorganic salt such as baking soda is added. The plant extract liquid such as a mixed tea is not particularly limited for the purpose of controlling flavor, and can be obtained by extracting a plant material sufficient in meal experience using, as an extraction solvent, water or water to which an organic acid salt such as sodium ascorbate, an organic acid such as ascorbic acid, or an inorganic salt such as baking soda is added.

The packaged tea beverage according to the present invention preferably has a pH of 5 to 7, more preferably 5.5 to 6.9, still more preferably 5.5 to 6.5 at 20°C in view of the stability of flavor and the chemical stability of non-polymer catechins.

A bitterness- and astringency-relieving agent is preferably blended in the packaged tea beverage according to the present invention because it makes the beverage easy to drink. The bitterness- and astringency-relieving agent is not particularly limited; however, preferred is an oligosaccharide or a cyclodextrin. The cyclodextrin which may be used is α-, β- or γ-cyclodextrin or a branched α-, β- or γ-cyclodextrin. In the bevarage, the cyclodextrin is preferably contained in an amount of 0.005 to 0.5% by mass, more preferably 0.01 to 0.3% by mass. In the packaged tea beverage according to the present invention, there may be blended additives such as an antioxidant, any of various esters, an organic acid, an organic acid salt, an inorganic acid, an inorganic acid salt, an inorganic salt, a dye, an emulsifier, a preservative, a flavoring material, a sweetener, an acidulant, a gum, an emulsifier, an oil, a vitamin, an amino acid, a vegetable extract, a nectar extract, a pH adjuster, and a quality stabilizer, alone or in combination.

The container used for the packaged tea beverage according to the present invention also has an oxygen permeability of 0.1 ml/day bottle or less.

The container used for the packaged tea beverage according to the present invention may be provided in common forms such as a molded container consisting mainly of polyethylene terephthalate (a so-called PET bottle), a metal container (e.g., a steel or aluminum container), a bottle and a paper complexed with a metal foil or plastic film, as with popular beverages. As used herein, the packaged beverage refers to a beverage which can be drunk without dilution.

The packaged tea beverage according to the present invention is produced under sterilization conditions according to the Food Sanitation Law. For example, a production method is adopted which involves, as in the case of a metal can, packing the beverage in a container and then sterilizing the container by heating such as retort-sterilization or, in the case of a container weak in heat resistance and pressure resistance and incapable of being retort-sterilized, such as a PET bottle, a resealable metal container, a paper container, and a bottle container, sterilizing the beverage under the same sterilization condition as above in advance, for example, at high temperature for a short period of time using a plate type heat exchanger or the like and then packing it in a container after cooling down to a fixed temperature. Another component may also be blended and packed in the packed container under sterilization. In addition, it is also possible that the beverage is sterilized by heating under acidic conditions, followed by returning the pH to neutral under sterility, or is sterilized by heating under neutral conditions, followed by returning the pH to acidic under sterility.

### Examples

### Measurement of Non-polymer Catechins

A packaged tea beverage was diluted with distilled water, filtered with a filter (0.8 µm), and then measured by a gradient method using solutions A and B at a column temperature of 35°C employing a high performance liquid chromatograph (Model SCL-10AVP) from Shimadzu Corporation, equipped with L-Column TM ODS (4.6 mmφ×250 mm; from Chemicals Evaluation and Research Institute), a packed column for octadecyl-introduced liquid chromatograph. The measurement was performed under conditions of a sample injection volume of 20 µL and a UV detector wavelength of 280 nm using a distilled water solution containing 0.1 mole/L acetic acid as the mobile phase solution A and an acetonitrile solution containing 0.1 mole/L acetic acid as the solution B.

### Measurement of Caffeine

Caffeine was analyzed in the same procedure as for the non-polymer catechins.

### Measurement of Gallic Acid

Gallic acid was analyzed in the same procedure as for the non-polymer catechins. In this respect, conditions of the above gradient are as follows.

| Time (min.) | Solution A Concentration (vol.%) | Solution B Concentration (vol.%) |
|---|---|---|
| 0 | 97% | 3% |
| 5 | 97% | 3% |
| 37 | 80% | 20% |
| 43 | 80% | 20% |
| 43.5 | 0% | 100% |
| 48.5 | 0% | 100% |
| 49 | 97% | 3% |
| 60 | 97% | 3% |

### Evaluation Method for Bitterness

The method for measuring the intensity of bitterness used a bitterness intensity test method employing a quinine sulfate as an index (reference: Perception and Psychophysics, 5, 1969, 347-351 / JIS Z8144 / Sensory Test Handbook (New Edition) (pp.448-449) 10th issue issued on February 9th, 1990). Five panelists performed sensory evaluation by a method which involves comparing a test sample with quinine sulfate reference solutions having bitterness intensities different from each other (10 levels) and selecting a reference solution corresponding to the bitterness intensity of the sample. The results of the sensory evaluation were averaged and expressed as bitterness intensity value "τ".

### Flavor Stability Evaluation Method

The storage stability of flavor was evaluated in a storage test at 55°C for one month.
The flavor evaluation was performed by dividing flavor deterioration degrees into the three levels, high, medium and low.

### Stability Evaluation Method (Ratio of Epi-type Catechins in Non-polymer Catechins and pH)

Initial non-polymer catechins were measured and a change in the ratio of epi-type catechins in non-polymer catechins was evaluated in a storage test at 55°C for one month.
A difference from the ratio of epi-type catechins in non-polymer catechins on the 0th day of storage was expressed as "Δ%".

### (1) Tea Extract (a)

A green tea extract having a content of catechins of 30% was subjected to spray drying by a spray dry method without tannase treatment. The catechins were extracted from the resultant powder using a mixed solvent of ethanol and water (water:ethanol = 40:60). The extract was then purified by adding activated carbon in an amount of 8 parts by mass based on the mixed solution to provide tea extract (a). This extract had a ratio of gallate-type catechins of 52% by mass.

### (2) Tea Extract (b)

A green tea extract having a content of catechins of 30% was subjected to tannase treatment (tannase concentration: 0.5%, reaction temperature: 20°C, reaction solution's Brix: 20) and then spray-dried by a spray dry method. The catechins were extracted from the resultant powder using a mixed solvent of ethanol and water (water:ethanol = 40:60). The extract was then purified by adding activated carbon in an amount of 8 parts by mass based on the mixed solution to provide tea extract (b). This extract had a ratio of gallate-type catechins of 48% by mass.

### (3) Tea Extract (c)

A green tea extract having a content of catechins of 30% was subjected to tannase treatment (tannase concentration: 1.0%, reaction temperature: 20°C, reaction solution's Brix: 20) and then spray-dried by a spray dry method. The catechins were extracted from the resultant powder using a mixed solvent of ethanol and water (water:ethanol = 40:60). The extract was then purified by adding activated carbon in an amount of 8 parts by mass based on the mixed solution to provide tea extract (c). This extract had a ratio of gallate-type catechins of 32% by mass.

### (4) Tea Extract (d)

A green tea extract having a content of catechins of 30% was subjected to tannase treatment (tannase concentration: 2.0%, reaction temperature: 20°C, reaction solution's Brix: 20) and then spray-dried by a spray dry method. The catechins were extracted from the resultant powder using a mixed solvent of ethanol and water (water:ethanol = 40:60). The extract was then purified by adding activated carbon in an amount of 8 parts by mass based on the mixed solution to provide tea extract (d). This extract had a ratio of gallate-type catechins of 2% by mass.

### (5) Tea Extract (e)

A green tea extract having a content of catechins of 30% was subjected to tannase treatment (tannase concentration: 2.0%, reaction temperature: 20°C, reaction solution's Brix: 20) and then spray-dried by a spray dry method. The resultant powder was then diluted with water so that the concentration of catechins is 1%. The catechins were adsorbed to a synthetic adsorbent (SP70; Diaion) by adding 1 kg of the synthetic adsorbent to 4 kg of the powder. The residue of the green tea extract in the synthetic adsorbent was then washed out with water. The catechins were extracted from 1 kg of the washed SP70 with a mixed solvent of ethanol and water (water:ethanol = 50:50). The extract was then purified by adding activated carbon in an amount of 30 parts by mass based on the mixed solution to provide tea extract (e). This extract had a ratio of gallate-type catechins of 8% by mass.

### Analytical Value and Production Method of Tea Extract Liquid

To 1,000 g of water at 65°C was added 33.3 g of green tea leaves, which was then stirred at 250 r/min. for 30 seconds and thereafter kept for 90 seconds. Subsequently, the mixture was stirred at 250 r/min. for 10 seconds, kept for 170 seconds, and then filtered to provide 916 g of a green tea extract liquid. The green tea extract liquid had a concentration of non-polymer catechins of 0.2% by mass, a ratio of gallate-type catechins of 46% by mass, a caffeine concentration of 0.06% by mass, and a gallic acid content of 0.001% by mass.
The resultant green tea extract liquid was used as a tea extract liquid in Examples 2 and 3 and Comparative Example 1. The green tea extract liquid was also passed through a column packed with the resin SP70 (from Mitsubishi Chemical Corporation, 300 g) at a flow rate of 25 ml/min.; the resultant tea extract liquid was used in Example 1.
As for a black tea extract liquid for Example 4, 33.3 g of black tea leaves were added to 1,000 g of water at 65°C, which was then stirred at 250 r/min. for 30 seconds and thereafter kept for 90 seconds. Subsequently, the mixture was stirred at 250 r/min. for 10 seconds, kept for 170 seconds, and then filtered to provide 892 g of a black tea extract liquid. The black tea extract liquid was also passed through a column packed with the resin SP70 (from Mitsubishi Chemical Corporation, 300 g) at a flow rate of 25 ml/min.; the resultant tea extract liquid was used in Example 4.
As for an oolong tea extract liquid for Example 5, 33.3 g of oolong tea leaves were added to 1,000 g of water at 65°C, which was then stirred at 250 r/min. for 30 seconds and thereafter kept for 90 seconds. Subsequently, the mixture was stirred at 250 r/min. for 10 seconds, kept for 170 seconds, and then filtered to provide 933 g of an oolong tea extract liquid. The resultant black tea extract liquid was also passed through a column packed with the resin SP70 (from Mitsubishi Chemical Corporation, 300 g) at a flow rate of 25 ml/min.; the resultant tea extract liquid was used in Example 5.

### Examples 1 to 5 and Comparative Example 1

Tea beverages (pH6) were produced according to the recipes described in Tables 1 and 2. The beverages were each sterilized by high-temperature (138°C) short-time (30 seconds) sterilization and then packed in a transparent PET bottle having an oxygen permeability of 0.03 mL/day · bottle (as determined using an oxygen permeability measuring apparatus from MOCON).

**[Table 1]**

| | | Example 1 | Example 2 | Example 3 | Comparative Example 1 |
|---|---|---|---|---|---|
| <Recipe> | Unit | | | | |
| Green Tea Extract Liquid | % by mass | | 22 | 22 | 22 |
| Green Tea Extract Liquid (Subjected to Removal Treatment of Caffeine and Gallate-type Catechins) | % by mass | 5 | | | |
| Tea Extract (a) | % by mass | | | | 0.59 |
| Tea Extract (b) | % by mass | | | 0.59 | |
| Tea Extract (c) | % by mass | | 0.59 | | |
| Tea Extract (d) | % by mass | 0.59 | | | |
| Vitamin C | % by mass | 0.06 | 0.06 | 0.06 | 0.06 |
| Baking Soda | % by mass | 0.007 | 0.016 | 0.009 | 0.007 |
| Cyclic Oligosaccharide | % by mass | 0.8 | 0.8 | 0.8 | 0.8 |
| Ion-exchange Water | % by mass | Balance | Balance | Balance | Balance |
| Total Amount | % by mass | 100 | 100 | 100 | 100 |
| <Analytical Value> Concentration of Non-polymer Catechins in Beverage | % by mass | 0.17 | 0.18 | 0.17 | 0.17 |
| Ratio of Gallate-type Catechins in Non-polymer Catechins | % by mass | 2 | 36 | 47 | 52 |
| Caffeine/Non-polymer Catechins in Beverage | Mass Ratio | 0 | 0.13 | 0.13 | 0.13 |
| Concentration of Gallic Acid in Beverage | ppm | 10 | 150 | 30 | 20 |
| Ratio of Epi-type Catechins in Non-polymer Catechins | % | 46 | 48 | 50 | 52 |
| <Initial Bitterness> | | 2 | 4 | 5 | 7 |
| <Flavor Stability Evaluation Initial Value-55°C 1M> | | Low Deteriorati on | Low Deteriorati on | Medium Deteriorate on | High Deterioration |
| <Stability Evaluation Initial Value-55°C 1M> Ratio of Epi-type Catechins in Non-polymer Catechins (Δ%) | | 7.7 | 7.7 | 8.7 | 10.0 |
| | | | | | |

**[Table 2]**

| | | Example 4 | Example 5 |
|---|---|---|---|
| <Recipe> | Unit | | |
| Black Tea Extract Liquid | % by mass | 21 | |
| Oolong Tea Extract Liquid | % by mass | | 22 |
| Tea Extract (e) | % by mass | 0.59 | 0.59 |
| Vitamin C | % by mass | 0.06 | 0.06 |
| Baking Soda | % by mass | 0.01 | 0.01 |
| Cyclic Oligosaccharide | % by mass | 0.8 | 0.8 |
| Ion-exchange Water | % by mass | Balance | Balance |
| Total Amount | % by mass | 100 | 100 |
| <Analytical Value> Concentration of Non-polymer Catechins in Beverage | % by mass | 0.17 | 0.18 |
| Ratio of Gallate-type Catechins in Non-polymer Catechins | % by mass | 9 | 10 |
| Caffeine/Non-polymer Catechins in Beverage | Mass Ratio | 0 | 0.01 |
| Concentration of Gallic Acid in Beverage | ppm | 30 | 30 |
| Ratio of Epi-type Catechins in Non-polymer Catechins | % | 48 | 47 |
| <Initial Bitterness> | | 3 | 3 |
| <Flavor Stability Evaluation Initial Value-55°C 1M> | | Low Deterioration | Low Deterioration |
| <Stability Evaluation Initial Value-55°C 1M> Ratio of Epi-type Catechins in Non-polymer Catechins (Δ%) | | 3.5 | 3.2 |

| | | | |
|---|---|---|---|
| *) Green tea beverages were produced in Examples 1 to 3 and Comparative Example; a black tea beverage, in Examples 4; and an oolong tea beverage, in Example 5. | | | |

Tables 1 and 2 show that the beverage having a ratio of gallate-type catechins of more than 50% by mass is more bitter and the storage of the beverage changes the flavor and ratio of epi-type catechins thereof. In contrast, it is realized that the beverages adjusted to ratios of gallate-type catechins of less than 50% by mass has reduced bitterness and even the storage of the beverages less easily changes the flavor and ratio of epi-type catechins thereof.

Further, when gallic acid was added to the tea beverage of Example 1 to evaluate the flavor, the gallic acid concentration of 50 ppm or 150 ppm caused no problem with the flavor. However, the gallic acid concentration of 200 ppm or more was found to cause foreign taste.

## Claims

1. A packaged tea beverage, comprising a tea extract having a ratio of gallate-type catechins in non-polymer catechins of less than 50% by mass added to a tea extract liquid, and containing the following components:
(A) 0.072 to 0.4% by mass of non-polymer catechins and
(B) 21 to 150 ppm of gallic acid,
wherein a ratio of gallate-type catechins in non-polymer catechins is 0 to 50% by mass and a ratio of epi-type catechins in non-polymer catechins is 30 to 60% by mass.

2. The packaged tea beverage according to claim 1, wherein the tea extract liquid is one or more selected from the group consisting of a green tea extract liquid, an oolong tea extract liquid, and a black tea extract liquid.

3. The packaged tea beverage according to claim 1 or 2, wherein the beverage has a pH of 5 to 7 as measured at a liquid temperature of 20°C.

4. The packaged tea beverage according to any one of claims 1 to 3, wherein the beverage has a ratio of caffeine to total non-polymer catechins of 0.2 or less.

5. The packaged tea beverage according to any one of claims 1 to 4, wherein the oxygen transmission rate of the bottle used for said package is not more than 0.1 mL/day · bottle.
